# FASCICULE DE BREVET EUROPEEN

(11) **EP 3 233 589 B1**
(45) Date de publication et mention de la délivrance du brevet: **21.04.2021**
(21) Numéro de dépôt: 15805441.1
(22) Date de dépôt: 02.12.2015
(51) Int. Cl.: B60R 25/021

(54) **ANTIVOL D'UNE COLONNE DE DIRECTION D'UN VEHICULE AUTOMOBILE**
DIEBSTAHLSCHUTZ FÜR LENKSÄULE IN EINEM KRAFTFAHRZEUG
ANTITHEFT DEVICE FOR A STEERING COLUMN OF A MOTOR VEHICLE

(30) Priorité: 18.12.2014 FR 1462841
(43) Date de publication de la demande: 25.10.2017
(73) Titulaire: U-Shin France, 94000 Créteil (FR)
(72) Inventeur: RENAUD, Jean-Pierre, 94046 Creteil Cedex (FR); DESARMENIEN, Alain, 94046 Creteil Cedex (FR)
(74) Mandataire: Verriest, Philippe
(86) Numéro de dépôt international: PCT/EP2015/078426
(87) Numéro de publication internationale: WO 2016/096441

(56) Documents cités:
- EP-A1- 0 669 234
- GB-A- 1 517 021

## Description

La présente invention concerne un verrou pour antivol d'une colonne de direction d'un véhicule automobile.

L'invention se rapporte au domaine des verrous et antivols pour colonne de direction de véhicules automobiles destinés, en particulier, à commander le blocage d'une colonne de direction du véhicule à l'arrêt du véhicule automobile et le déblocage lors de l'allumage et du roulage dudit véhicule.

Il est connu que les antivols pour colonne de direction, comprennent en général au moins un rotor mobile en rotation dans un stator à l'aide d'une clé conforme. Le rotor entraîne lors de sa rotation une came avec lequel il est lié qui est configurée pour déplacer un pêne dans une position de verrouillage et une position de déverrouillage de la colonne de direction. Dans la position de verrouillage, le pêne vient bloquer la colonne de direction en s'insérant dans un logement prévu sur la colonne de direction. Dans la position de déverrouillage, le pêne est entraîné via la came à se retirer de la colonne de direction laissant cette dernière libre en rotation. De tels antivols sont connus par exemple du document GB1517021.

Le véhicule automobile est particulièrement vulnérable en ce qui concerne les vols lorsque ce dernier est à l'arrêt. En effet, si un voleur réussit à retirer le pêne hors de la colonne de direction alors que la voiture est à l'arrêt, le véhicule est manœuvrable, une fois démarré.

Il existe donc un besoin d'augmenter l'invulnérabilité du véhicule automobile, en particulier du verrou, qui soit simple à mettre en œuvre et efficace.

A cet effet, la présente invention est définie par la revendication 1 et concerne un verrou pour antivol d'une colonne de direction d'un véhicule automobile, comprenant :
- un stator s'étendant selon un axe principal et comportant au moins deux parties,
- un dispositif de commande logé à l'intérieur du stator et comprenant un rotor s'étendant selon l'axe principal, ledit dispositif de commande étant configuré pour prendre une position de verrouillage et une position de déverrouillage de la colonne de direction, lorsque ledit rotor est entraîné en rotation autour de l'axe principal,
- au moins deux ensembles de fixation dont chaque ensemble de fixation est disposé entre le dispositif de commande et les parties du stator et est configuré pour maintenir solidaire les parties du stator au dispositif de commande lorsque le dispositif de commande est en position de verrouillage et pour laisser libre en rotation le rotor lorsque le dispositif de commande est en position de dé verrouillage.

Le verrou selon l'invention permet donc de manière simple et efficace d'empêcher l'ouverture de l'antivol en position de verrouillage puisqu'il n'est plus possible d'ouvrir le stator protégeant l'accès au pêne.

Le rotor et la came étant hors d'atteinte, il n'est pas possible d'avoir accès au pêne ni de pouvoir remonter ce dernier.

Un tel verrou permet ainsi de rendre impossible le retrait du pêne hors de la colonne de direction, lorsque le pêne est en position de verrouillage, en passant par le logement du verrou. Il est très difficile voire impossible, d'avoir accès à l'élément de blocage disposé entre le rotor et le pêne et donc de neutraliser cet élément de blocage.

Ainsi, de manière simple, peu coûteuse et efficace, le verrou de l'invention permet d'augmenter la sécurité contre le vol de véhicule automobile lorsque ce dernier est verrouillé.

Selon l'invention, chaque ensemble de fixation comporte deux éléments de fixation complémentaires dont l'un est porté par le dispositif de commande et l'autre par une partie du stator.

Selon l'invention, au moins un ensemble de fixation, les deux éléments complémentaires sont formés par un crochet et un orifice configuré pour recevoir ledit crochet lorsque le verrou est en position de verrouillage.

Suivant des modes de réalisation préférés, le verrou de véhicule automobile selon l'invention comprend une ou plusieurs des caractéristiques suivantes, prises séparément ou en combinaison :
- le dispositif de commande comporte au moins deux crochets et chaque partie du stator comporte un orifice formée par une extension des parois du stator pour recevoir chacune un crochet ;
- au moins un élément de fixation d'un ensemble de fixation est monobloc avec le dispositif de commande et/ou avec la partie du stator ;
- les ensembles de fixation sont répartis régulièrement de manière radiale entre le dispositif de commande et les parties du stator ;
- le stator comporte un stator intermédiaire débrayable s 'étendant selon l'axe principal, fixe relativement au rotor et logeant ce dernier ;
- chaque partie du stator présente un évidement autour de chaque ensemble de fixation ;
- les parties du stator sont réalisés dans des matériaux différents.

Selon un autre aspect, l'invention concerne également un antivol pour une colonne de direction d'un véhicule automobile comportant un verrou selon l'invention.

D'autres caractéristiques et avantages de l'invention apparaîtront à la lecture de la description qui suit d'un mode de réalisation préféré de l'invention, donné à titre d'exemple non limitatif et en référence aux dessins annexés sur lesquels :
- la figure 1 est une vue en perspective éclatée d'un mode de réalisation d'un antivol selon l'invention ;
- la figure 2 est une coupe transversale en perspective suivant l'axe I-I du mode de réalisation de la figure 1, l'antivol étant assemblé;
- la figure 3 est une coupe transversale du verrou selon le mode de réalisation de la figure 1 ;
- la figure 4 est une vue en perspective de côté du dispositif de commande du verrou selon le mode de réalisation de la figure 1 ;
- les figures 5 et 6 sont une vue de côté et de face, respectivement, du verrou lorsque le dispositif de commande du mode de réalisation de la figure 1 est en position de verrouillage.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

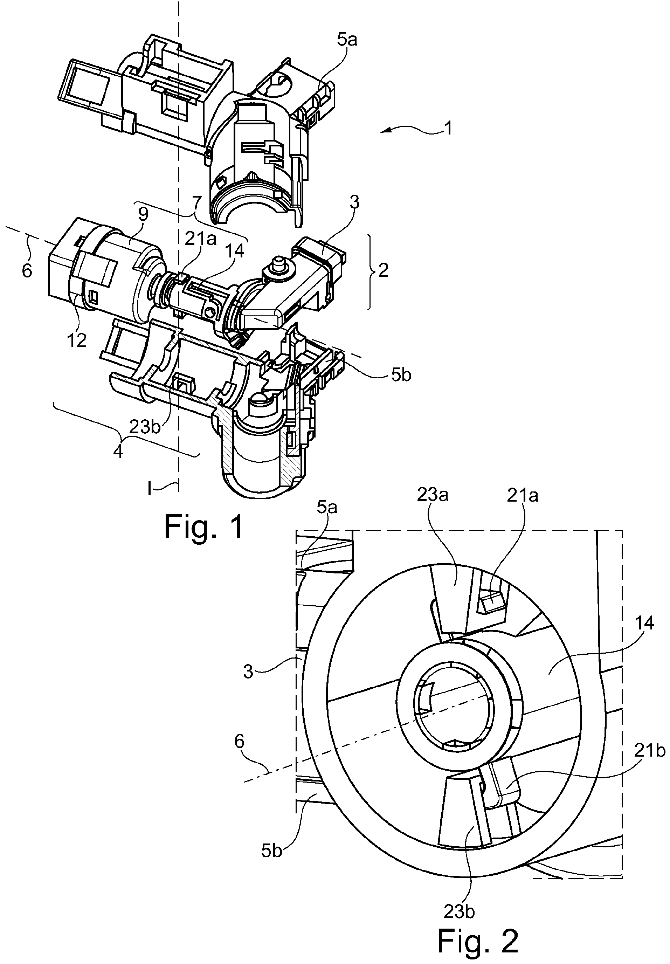

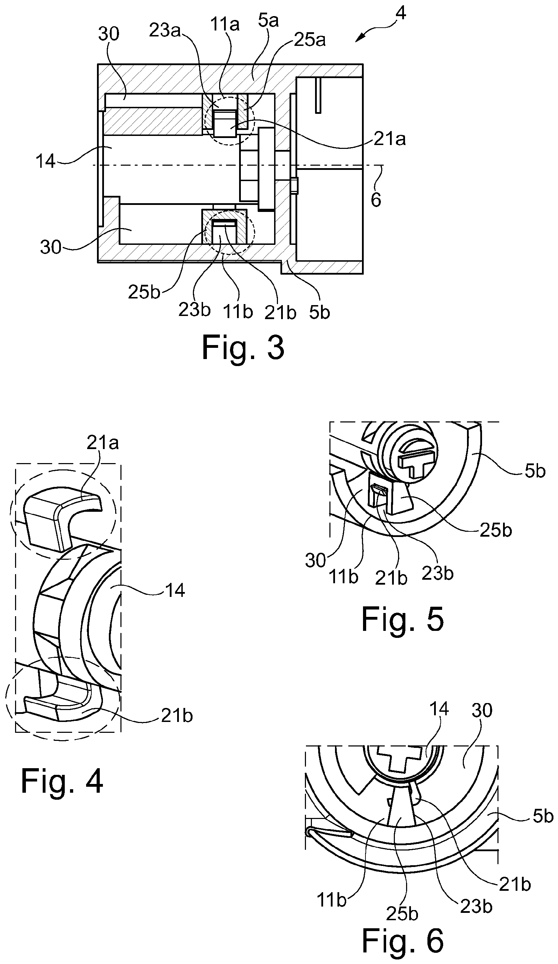

Comme représenté sur les figures 1 à 6, l'antivol 1 de l'invention comporte une partie 2 apte à bloquer la colonne de direction (non représentée) du véhicule automobile au moyen d'un pêne 3. Le mouvement de pêne autorisant ou non le blocage de la colonne de direction est commandé par le verrou 4.

Le verrou 4 de l'invention comprend :
- un stator 5 s 'étendant selon un axe principal 6 et comportant au moins deux parties 5a et 5b,
- un dispositif de commande 7 logé à l'intérieur du stator 5 et comprenant un rotor 9 s'étendant selon l'axe principal 6, ledit dispositif de commande 7 étant configuré pour prendre une position de verrouillage et une position de déverrouillage de la colonne de direction, lorsque ledit rotor 9 est entraîné en rotation autour de l'axe principal 6,
- au moins deux ensembles de fixation 11a et 11b configurés pour maintenir solidaire les au moins deux parties 5a et 5b du stator au dispositif de commande 7, chaque ensemble de fixation 11a et 11b étant disposé entre le dispositif de commande 7 et les parties du stator 5a et 5b et configuré pour maintenir solidaire les parties du stator 5a et 5b au dispositif de commande 7 lorsque le dispositif de commande 7 est en position de verrouillage et pour laisser libre en rotation le rotor 9 lorsque le dispositif de commande 7 est en position de dé verrouillage.

Le verrou 4 selon l'invention permet donc de manière simple et efficace d'empêcher l'ouverture de l'antivol 1 de l'invention en position de verrouillage puisqu'il n'est plus possible d'ouvrir le stator 5 protégeant le rotor 9.

Le rotor 9 étant hors d'atteinte, il n'est pas possible d'avoir accès au pêne 3 par le rotor 9 ni de pouvoir remonter le pêne 3 par ce biais.

Le verrou 9 de l'invention permet de rendre impossible, le retrait du pêne 3 hors de la colonne de direction, lorsque le pêne 3 est en position de verrouillage, en passant par le logement du verrou. Il est très difficile voire impossible, d'avoir accès à l'élément de blocage disposé entre le rotor 9 et le pêne 3 et donc de neutraliser cet élément de blocage.

Ainsi, de manière simple, peu coûteuse et efficace, le verrou 9 de l'invention permet d'augmenter la sécurité contre le vol de véhicule automobile lorsque ce dernier est verrouillé.

On entend par « position de verrouillage », la position du rotor du dispositif de commande au sein du stator engendrant un blocage de la rotation de la colonne de direction.

On entend par «position de déverrouillage», la position du rotor du dispositif de commande au sein du stator engendrant une libre rotation de la colonne de direction.

Le stator 5 est fixe relativement au dispositif de commande 7 et a pour fonction de protéger ledit dispositif de commande 7. Ledit stator 5 peut être formé d'une unique pièce ou de plusieurs pièces, comme visible sur les figures 1 et 2. Dans ce mode de réalisation, le stator 5 comporte une collerette 12.

Les deux parties 5a et 5b du stator peuvent être liées par différents moyens, tel que la soudure et/ou le clippage.

Les parties du stator 5a et 5b sont réalisés dans des matériaux identiques ou différents.

Le stator 5 peut comporter un stator intermédiaire (non représenté) s 'étendant selon l'axe principal 6, fixe relativement au rotor 9 et logeant ce dernier. Le stator intermédiaire peut être un stator débrayable ou non.

Le dispositif de commande 7 comporte selon l'invention le rotor 9 et peut comporter d'autres éléments. Ainsi, on peut citer une came 14 entraînée par le rotor 9 et configurée pour entraîner à son tour en mouvement le pêne 2. La came 14 est typiquement mobile en rotation suivant un axe de rotation qui peut être colinéaire ou non à celui 6 du rotor.

Selon le mode de réalisation représenté, chaque ensemble de fixation 11a et 11b peut comporter deux éléments de fixation 21a, 23a et 21b, 23b complémentaires dont l'un 21a, 21b est porté par le dispositif de commande 7 et l'autre 23a, 23b par une partie 5a, 5b du stator. Dans le mode de réalisation tel que représenté sur les figures, au moins un élément de fixation, ici 21a, 21b, deux, est disposé directement sur le rotor 9.

Avantageusement, dans au moins un ensemble de fixation 11a, 11b, les deux éléments complémentaires 21a, 23a et 21b, 23b sont formés par un crochet 21a, 21b et un orifice 23a, 23b configuré pour recevoir ledit crochet 21a, 21b lorsque le dispositif de commande 7 est en position de verrouillage.

Le dispositif de commande 7 peut ainsi comporter au moins deux crochets 21a et 21b et chaque partie 5a, 5b du stator comportant alors un orifice 23a, 23b pour recevoir chacun un crochet 21a, 21b. Dans le cas de la présence d'un stator intermédiaire, les éléments de fixation 23a et 23b peuvent être fixés sur ledit stator intermédiaire.

Avantageusement, au moins un élément 21a, 23a, 21b et 23b d'un ensemble de fixation est monobloc avec le dispositif de commande 7 et/ou avec la partie correspondante. Dans le mode de réalisation représenté sur les figures, l'orifice 23a, 23b est réalisée de manière monobloc avec la partie 5a et 5b du stator et les crochets 21a, 21b sont formés également de manière monobloc avec le dispositif de commande 7. Ainsi, on renforce la robustesse des ensembles de fixation 11a et 11b.

L'orifice 23a, 23b peut être réalisé soit directement dans la paroi du stator 5 ou bien, comme visible sur les figures, par une extension 25a et 25b de la paroi dudit stator.

Les ensembles de fixation 11a et 11b peuvent être réparties régulièrement de manière radiale entre le dispositif de commande 7 et les parties 5a et 5b du stator. Ceci permet de simplifier le montage. En particulier, le verrou de l'invention 4 peut avoir deux ensembles de fixations 11a et 11b montés à sensiblement 180° l'un de l'autre.

Le dispositif de commande 7 peut comporter des pièces intermédiaires, telles que la came 14, pouvant supporter un des éléments d'un ensemble de fixation 11a, 11b.

Avantageusement, chaque partie 5 a, 5b du stator peut présenter un évidement 30 autour de chaque ensemble de fixation, afin de faciliter le montage et de rendre fusible la connexion entre les éléments de fixation 21a, 23a, 21b, 23b.

La cinématique du verrou 4 selon l'invention va maintenant être décrite plus en détail.

Lorsque le dispositif de commande n'est pas activé, à savoir que le rotor 9 n'est pas mis en rotation, les deux éléments de fixation complémentaires 21a, 23a et 21b, 23b s'imbriquent l'un dans l'autre de sorte à maintenir chaque partie 5a et 5b du stator solidaire au dispositif de commande 7, ici directement le rotor 9. Ainsi, dans le cas où les éléments de fixation comprennent un crochet apte à venir dans un orifice correspondant, la partie du rotor est maintenue fixe au stator grâce à la coopération du crochet dans l'orifice.

Lorsque le dispositif de commande 7 est activé, à savoir le rotor 9 est mis en rotation autour de son axe de rotation 6, les éléments complémentaires de fixation 21a, 21b et 23a, 23b ne coopèrent plus de sorte que le rotor 9 est rendu libre en rotation et peut donc tourner selon son axe de rotation 6 sans être gêné par la présence des ensembles de fixation 11a et 11b.

Dans le cas de crochet coopérant avec un orifice, la rotation du rotor libère le crochet de l'orifice.

## Revendications

1. Verrou (4) pour antivol (1) d'une colonne de direction d'un véhicule automobile, comprenant :
- un stator (5) s'étendant selon un axe principal (6) et comportant au moins deux parties (5a ; 5b),
- un dispositif de commande (7) logé à l'intérieur du stator (5) et comprenant un rotor (9) s'étendant selon l'axe principal (6), ledit dispositif de commande (7) étant configuré pour prendre une position de verrouillage et une position de déverrouillage de la colonne de direction, lorsque ledit rotor (9) est entrainé en rotation autour de l'axe principal (6),
- au moins deux ensembles de fixation (11a ; 11b) dont chaque ensemble de fixation (11a ; 11b) est disposé entre le dispositif de commande (7) et les parties du stator (5a,5b) et est configuré pour maintenir solidaire les parties du stator (5a, 5b) au dispositif de commande (7) lorsque le dispositif de commande (7) est en position de verrouillage et pour laisser libre en rotation le rotor (9) lorsque le dispositif de commande (7) est en position de déverrouillage,
chaque ensemble de fixation (11a, 11b) comportant deux éléments de fixation (21a, 23a ; 21b, 23b) complémentaires dont l'un (21a ; 21b) est porté par le dispositif de commande (7) et l'autre (23a ; 23b) par une partie (5a ; 5b) du stator,
ledit verrou étant **caractérisé en ce que** dans au moins un ensemble de fixation (5a ; 5b), les deux éléments complémentaires sont formés par un crochet (21a ; 21b) et un orifice (23a ; 23b) configuré pour recevoir ledit crochet (21a ; 21b) lorsque le verrou (4) est en position de verrouillage.

2. Verrou (4) selon la revendication précédente, dans lequel le dispositif de commande (7) comporte au moins deux crochets (21a ; 21b) et chaque partie (5a ; 5b) du stator comporte un orifice (23a ; 23b) formée par une extension (25a ; 25b) des parois du stator (5) pour recevoir chacune un crochet (21a ; 21b).

3. Verrou (4) selon l'une des revendications précédentes, dans lequel au moins un élément de fixation (5a ; 5b) d'un ensemble de fixation est monobloc avec le dispositif de commande (7) et/ou avec la partie du stator (5a ; 5b).

4. Verrou (4) selon l'une des revendications précédentes, dans lequel les ensembles de fixation (21a, 23a ; 21b, 23b) sont réparties régulièrement de manière radiale entre le dispositif de commande (7) et les parties du stator (5a ; 5b).

5. Verrou (4) selon l'une quelconque des revendications précédentes, dans lequel le stator (5) comporte un stator intermédiaire débrayable s'étendant selon l'axe principal (6), fixe relativement au rotor (9) et logeant ce dernier.

6. Verrou selon l'une quelconque des revendications précédentes, dans lequel chaque partie (5a ; 5b) du stator présente un évidement (30) autour de chaque ensemble de fixation (11a ; 11b).

7. Verrou (4) selon l'une quelconque des revendications précédentes dans lequel les parties du stator (5a ; 5b) sont réalisés dans des matériaux différents.

8. Antivol (1) pour une colonne de direction d'un véhicule automobile comportant un verrou (4) selon l'une quelconque des revendications précédentes.

## Patentansprüche

1. Verriegelung (4) für eine Diebstahlsicherung (1) einer Lenksäule eines Kraftfahrzeugs, umfassend:
- einen Stator (5), der sich entlang einer Hauptachse (6) erstreckt und mindestens zwei Teile (5a; 5b) beinhaltet,
- eine Steuerungsvorrichtung (7), die im Inneren des Stators (5) aufgenommen ist und einen Rotor (9) umfasst, der sich entlang der Hauptachse (6) erstreckt, wobei die Steuerungsvorrichtung (7) konfiguriert ist, um eine Verriegelungsposition und eine Entriegelungsposition der Lenksäule einzunehmen, wenn der Rotor (9) um die Hauptachse (6) herum in Drehung angetrieben wird,
- mindestens zwei Befestigungsbaugruppen (11a; 11b), wovon jede Befestigungsbaugruppe (11a; 11b) zwischen der Steuerungsvorrichtung (7) und den Teilen des Stators (5a, 5b) angeordnet ist, und konfiguriert ist, um die Teile des Stators (5a, 5b) fest mit der Steuerungsvorrichtung (7) verbunden zu halten, wenn die Steuerungsvorrichtung (7) in Verriegelungsposition ist, und um den Rotor (9) frei drehend zu lassen, wenn die Steuerungsvorrichtung (7) in Entriegelungsposition ist,
wobei jede Befestigungsbaugruppe (11a; 11b) zwei ergänzende Befestigungselemente (21a, 23a; 21b, 23b) beinhaltet, von denen das eine (21a; 21b) durch die Steuerungsvorrichtung (7), und das andere (23a; 23b) durch einen Teil (5a; 5b) des Stators getragen wird,
wobei die Verriegelung **dadurch gekennzeichnet ist, dass** in mindestens einer Befestigungsbaugruppe (5a; 5b) die beiden ergänzenden Elemente durch einen Haken (21a; 21b) und eine Öffnung (23a; 23b) gebildet werden, die konfiguriert ist, um den Haken (21a; 21b) aufzunehmen, wenn die Verriegelung (4) in Verriegelungsposition ist.

2. Verriegelung (4) nach dem vorstehenden Anspruch, wobei die Steuerungsvorrichtung (7) mindestens zwei Haken (21a; 21b) beinhaltet und jeder Teil (5a; 5b) des Stators eine Öffnung (23a; 23b) beinhaltet, die durch eine Erweiterung (25a; 25b) der Wände des Stators (5) gebildet wird, um jeweils einen Haken (21a; 21b) aufzunehmen.

3. Verriegelung (4) nach einem der vorstehenden Ansprüche, wobei mindestens ein Befestigungselement (5a; 5b) einer Befestigungsbaugruppe in einem Stück mit der Steuerungsvorrichtung (7) und/ oder mit dem Teil des Stators (5a; 5b) ist.

4. Verriegelung (4) nach einem der vorstehenden Ansprüche, wobei die Befestigungsbaugruppen (21a, 23a; 21b, 23b) regelmäßig in radialer Form zwischen der Steuerungsvorrichtung (7) und den Teilen des Stators (5a; 5b) verteilt sind.

5. Verriegelung (4) nach einem der vorstehenden Ansprüche, wobei der Stator (5) einen auskuppelbaren Zwischen-Stator beinhaltet, der sich entlang der Hauptachse (6) in Bezug zum Rotor (9) feststehend erstreckt und diesen letzteren aufnimmt.

6. Verriegelung nach einem der vorstehenden Ansprüche, wobei jeder Teil (5a; 5b) des Stators eine Aussparung (30) um jede Befestigungsbaugruppe (11a; 11b) herum aufweist.

7. Verriegelung (4) nach einem der vorstehenden Ansprüche, wobei die Teile des Stators (5a; 5b) aus unterschiedlichen Werkstoffen gefertigt sind.

8. Diebstahlsicherung (1) für eine Lenksäule eines Kraftfahrzeugs, die eine Verriegelung (4) nach einem der vorstehenden Ansprüche beinhaltet.

## Claims

1. A lock (4) for an anti-theft device (1) of a steering column of a motor vehicle, comprising
- a stator (5) extending along a main axis (6) and including at least two portions (5a; 5b),
- a control device (7) housed inside the stator (5) and comprising a rotor (9) extending along the main axis (6), said control device (7) being configured to take a locking position and an unlocking position of the steering column, when said rotor (9) is driven in rotation about the main axis (6),
- at least two fastening assemblies (11a; 11b) of which each fastening assembly (11a; 11b) is disposed between the control device (7) and the portions of the stator (5a, 5b) and is configured to hold the portions of the stator (5a, 5b) secured to control device (7) when the control device (7) is in the locking position and to allow the rotor (9) to rotate freely when the control device (7) is in the unlocking position,
each fastening assembly (11a, 11b) including two complementary fastening elements (21a, 23a; 21b, 23b), one of which (21a; 21b) is carried by the control device (7) and the other (23a; 23b) by a portion (5a; 5b) of the stator,
said lock being **characterized in that**, in at least one fastening assembly (5a; 5b), the two complementary elements are formed by a hook (21a; 21b) and an orifice (23a; 23b) which is configured to receive said hook (21a; 21b) when the lock (4) is in the locking position.

2. The lock (4) according to the preceding claim, wherein the control device (7) includes at least two hooks (21a; 21b) and each portion (5a, 5b) of the stator includes an orifice (23a; 23b) formed by an extension (25a; 25b) of the walls of the stator (5) to each receive a hook (21a; 21b).

3. The lock (4) according to any of the preceding claims, wherein at least one fastening element (5a; 5b) of a fastening assembly is formed in one piece with the control device (7) and/or with the portion of the stator (5a; 5b).

4. The lock (4) according to any of the preceding claims, wherein the fastening assemblies (21a, 23a; 21b, 23b) are evenly distributed radially between the control device (7) and the portions of the stator (5a; 5b).

5. The lock (4) according to any one of the preceding claims, wherein the stator (5) includes a disengageable intermediate stator extending along the main axis (6), which is fixed relative to the rotor (9) and housing the latter.

6. The lock according to any one of the preceding claims, wherein each portion (5a; 5b) of the stator has a recess (30) around each fastening assembly (11a; 11b).

7. The lock (4) according to any one of the preceding claims, wherein the portions of the stator (5a; 5b) are made of different materials.

8. An anti-theft device (1) for a steering column of a motor vehicle including a lock (4) according to any one of the preceding claims.
